# EUROPEAN PATENT SPECIFICATION

(11) **EP 0 478 135 B1**
(45) Date of publication and mention of the grant of the patent: **12.01.1994**
(21) Application number: 91307615.4
(22) Date of filing: 19.08.1991
(51) Int. Cl.: A21C 11/10, A21C 11/16, B26D 3/16

(54) **Apparatus for cutting an enveloped body**
Schneidvorrichtung für einen umhüllten Körper
Appareil pour couper un corps enveloppé

(30) Priority: 12.09.1990 JP 241510/90; 06.10.1990 JP 268643/90; 08.10.1990 JP 105715/90 U; 12.10.1990 JP 107029/90
(43) Date of publication of application: 01.04.1992
(73) Proprietor: RHEON AUTOMATIC MACHINERY CO. LTD., Utsunomiya-shi Tochigi-ken (JP)
(72) Inventor: Watanabe, Masahiko, Utsunomiya-shi, Tochigi-ken (JP); Onoguchi, Kazuyoshi, Utsunomiya-shi, Tochigi-ken (JP); Tashiro, Yasunori, Utsunomiya-shi, Tochigi-ken (JP)
(74) Representative: Leale, Robin George

(56) References cited:
- EP-A- 0 230 368
- GB-A- 1 109 137
- US-A- 3 954 033

## Description

This invention is in general for an apparatus for cutting an enveloped body. More especially, it is for an apparatus for cutting a bar-shaped continuous cake dough crust that envelopes a filling such as bean jam, to produce spherical products with a smooth outer cover, without generating the problem of flower-like patterns formed on the outer cover, as well as without generating the problem of a filling protruding from the dough.

Various methods and apparatuses have been taught to cut an enveloped bun-like body by using a continuously fed two-layer material, such as is disclosed in U.S. Patent Nos. 4,734,024, 4,767,304 and 4,767,305. For example, U.S. Patent No. 4,734,024 discloses an apparatus for shaping a round body consisting of a dough coating and a filling. It comprises an assembly comprising a plurality of circumferentially disposed members combined to shape a spherical body. Each of the members has at least two sliding surfaces. They are so combined that a sliding surface of one member is slidable on a sliding surface of another member, that by sliding the members an opening is formed or closed in the center of the assembly,and that the opening is confined by walls consisting of the inwardly exposed part of the sliding surface of the members and is of a cross-sectional area. When the opening is completely open it is sufficiently large so as to pass a descending cylindrical body.

While cutting a spherical body by the assembly of slidable members of the prior art is effective, particularly in precluding a member from intruding into the body and thereby breaking the outer layer of the cylindrical body to expose the filling, it has certain disadvantages. Due to configurative and mechanical reasons in both the slidable members and in their assembly, a flower-like pattern is formed on the outer cover when a bar-shaped dough is cut. If a product with an even and smooth outer cover is to be produced, the product must be finished through extra manual work or other means. Also, if a product with a thin outer cover is to be produced, there are cases in which the filling is not completely covered and it is exposed at the center on both the top and bottom of the product, even when a thick dough material is used. Further, these cutting apparatuses may not be ideal for a continuous cutting operation. This is because when a bar-shaped dough material is continuously processed through them for a long time, the dough materials are likely to burn due to the frictional heat generated between slidable members, and they stick to the assembly and interrupt the operation.

According to the present invention there is provided an apparatus for cutting an enveloped body, comprising an assembly having at least three circumferentially disposed cutting members with at least two sliding surfaces, assembled in sliding contact with each other such that the sliding surfaces of adjacent cutting members are slidable along each other so as to form or close a central opening surrounded by the cutting members, the opening being opened and closed for cutting the enveloped body passing therethrough, wherein one sliding surface of a cutting member forms a convex surface and the other sliding surface forms a concave surface, the convex and the concave surfaces being complementary, and the convex surface of a cutting member being arranged so as to slide on the concave surface of an adjacent cutting member and to face the opening when it is opened.

In a preferred embodiment, each of the sliding surfaces facing the opening has a cutout at its outer end.

In another preferred embodiment, the apparatus further comprises a housing for receiving the assembly so constructed that the outer surfaces of the cutting members that form the outer envelope of the assembly slidingly abut the inner surface of the housing.

In another preferred embodiment, the apparatus further comprises a driving means to move the assembly up and down at the same time that the assembly opens and closes.

Some embodiments of the invention will now be described by way of example and with reference to the accompanying drawings, in which:-

Fig. 1 is a perspective view of a cutting member of an embodiment of this invention.

Fig. 2A shows partially assembled cutting members, one of which is shown in Fig. 1.

Fig. 2B is a perspective view of partially assembled cutting members of another embodiment of this invention.

Fig. 3 is a perspective view of a part of a cutting member. This view shows a recess for retaining lubricating oil.

Figs. 4, 5, and 6 are plan views of an assembly of the cutting members and their positional relationships before, during, and after a cycle of their sliding movements, respectively.

Figs. 7A, 7B, 7C, and 7D are cross sections of portions of cutting members and a bar-shaped dough. These Figures illustrate the process of cutting the dough.

Fig. 8 is a cross section of a product produced by a conventional cutting apparatus.

Fig. 9 is a perspective view of a product produced by a conventional cutting apparatus.

Fig. 10 is a cross section of a product produced by the apparatus of this invention. It shows the effect of cutting an enveloped body by the apparatus of this invention.

Fig. 11 is a cross section of a part of the cutting members of a conventional cutting apparatus. It schematically shows the process of cutting by such a cutting apparatus.

Fig. 12 is a top view of a product produced by a conventional cutting apparatus.

Fig. 13 is a plan view of an assembly of conventional cutting members.

Fig. 14 is a partial perspective view of conventional cutting members in an assembled state.

Fig. 15 is a plan view of conventional cutting members in an assembled state.

Fig. 16 is a schematic partial top view, partially broken away, of a base for driving the apparatus of this invention.

Fig. 17 is a cross section of the base.

Fig. 18 is a partial top view of the apparatus. In particular, it shows a driving ring mounted on the base.

Fig. 19 is a partial cross section of the apparatus.

Fig. 20 is a partial top view of the apparatus.

Fig. 21 is a perspective view of a cutting member with a guiding projection.

Fig. 22 is an enlarged partial cross section of the base.

Fig. 23 is an enlarged bottom view of the base.

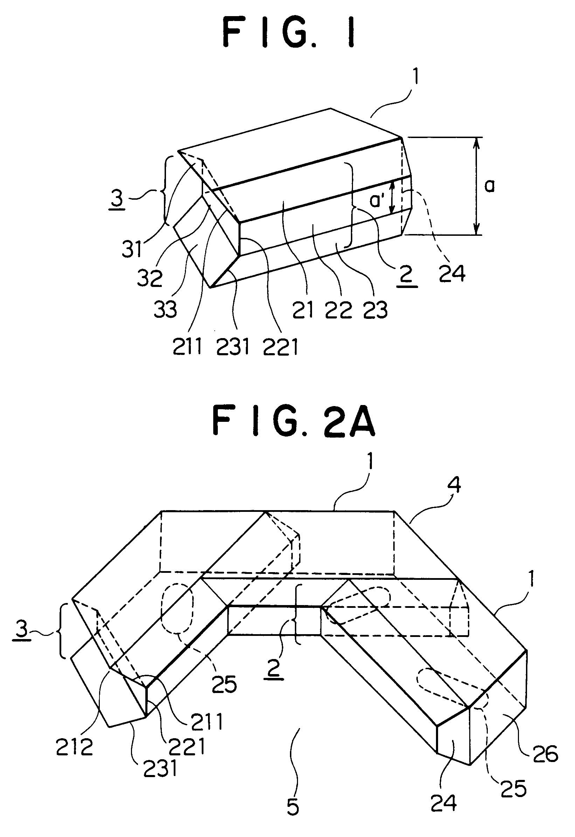

An example of the cutting member 1 is shown in Fig. 1. It is a polyhedral body with eleven planes. It is formed by cutting a hexahedral body with trapezoidal top and bottom planes running parallel to each other, and rectangular side planes. The height of the side planes, namely, the thickness of the cutting member, is a. The edge between the top plane and a side plane bordering the bottom of the top plane is beveled to provide a new plane that runs parallel to the two planes at angles to them. Likewise, the edge between the bottom plane and the same side plane is also beveled to provide a new plane that runs parallel to the two planes at angles to them. Thus, the original side plane of the hexahedral body is reduced in width. This plane and the newly-formed two planes, form a convex sliding surface 2. It consists of an upper surface 21, a middle surface 22, and a lower surface 23. The side plane of the hexahedral body that borders the top plane at its left side edge is hollowed into three planes. They run parallel to the same side edge. The three planes form a concave sliding surface 3. It consists of an upper surface 31, a middle surface 32, and a lower surface 33. The convex sliding surface 2 and the concave sliding surface 3 are formed to be complementary.

Referring to Figs. 1 and 2A, the part of the cutting member 1 where the convex sliding surface 2 meets the side 26 that is positioned opposite the concave side surface 3 is cut to form a cutout 24. It is at angles to the side 26 and the three surfaces 21, 22, and 23.

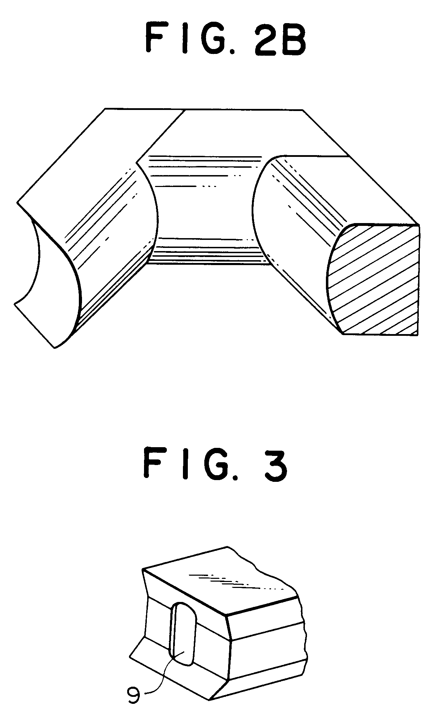

As shown in Fig. 3, the cutting member 1 may have a recess 9 to retain lubricating oil.

At least three identical cutting members can be assembled to form an assembly for the apparatus of this invention. Any change in the number of cutting members forming an assembly necessitates a change in their form. The cutting member 1 mentioned above can function as a part of an assembly for the apparatus of this invention when six of them are used. The number of cutting members is preferably 6 to 12.

In Fig. 2A the cutting members 1 are circumferentially arranged in a uniform orientation relative to each other so that the convex sliding surface 2 of a cutting member 1 slides over the concave sliding surface 3 of an adjacent cutting member 1, in the manner shown in Fig. 2A, wherein the cutting member 1 at the right abuts the cutting member 1 in the middle, and the concave sliding surface 3 of the right-hand cutting member is in a sliding relationship with the convex sliding surface 2 of the cutting member in the middle. The side of the right-hand cutting member that is opposite its convex sliding surface is positioned on the same plane as the side of the middle cutting member that is opposite its concave sliding surface. The positional relationship between the cutting member in the middle and that on the left side is the same. When six cutting members are arranged in this manner, an opening is formed in the center of the assembly. This opening is surrounded by the inwardly exposed parts of the convex sliding surfaces 2 of the cutting members. If the right-hand cutting member slides over the middle cutting member to the left, and the other cutting members slide likewise at the same time, then the opening formed in the center of the assembly decreases and eventually disappears. If the cutting members are made to slide in the other direction, then the opening reappears.

The structure of the cutting members forming the assembly of this invention enables the cutting members to not only close the opening in the center of the assembly, but also to form flat top and bottom surfaces of the assembly when the cutting members are further moved from the point where the opening has disappeared. When the cutting members are moved to the point where the opening disappears, the leading end of the convex sliding surface 2 of each cutting member 1, that is, the leftward end of the convex sliding surface of each cutting member in Fig. 2A, abuts, so that a hexagonal recess is formed. Owing to the structure of the cutting members, the convex sliding surface 2 of a first cutting member rides on the convex sliding surface 2 of an adjacent cutting member. This is possible because the convex sliding surface 2 of the adjacent cutting member fits in the concave sliding surface 3 of the first cutting member and the first cutting member can further progress in the same direction, or, in other words, the adjacent cutting member can slide back along the concave sliding surface 3 of the first cutting member. If all cutting members move at the same time, the exposed part of the convex surface of each cutting member disappears.

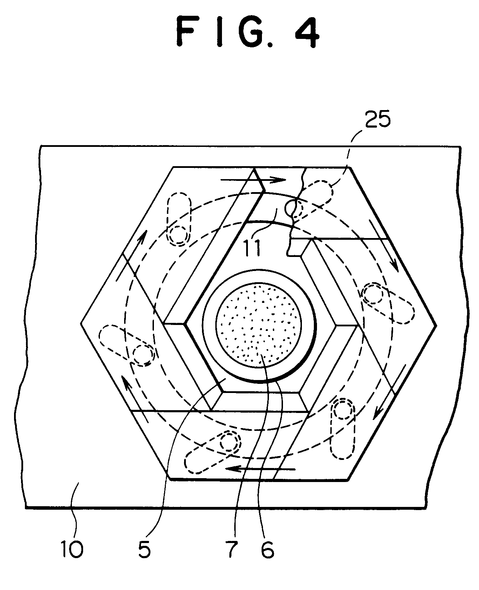

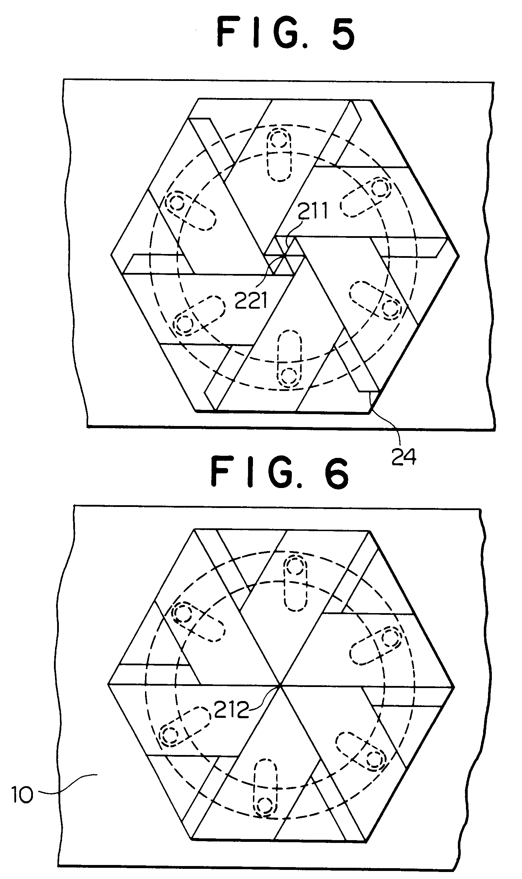

The above movement can be further explained by reference to Figs. 4, 5, and 6. These figures show the cutting members being received in a housing 10 that is formed in the apparatus to accomodate them. The housing 10 has a hollow hexagonal space that corresponds to the periphery of the assembly when the cutting members are positioned farthest from the center, with the opening 5 at its widest area in the center. However, the movement of the cutting members in the housing 10 is the same as-that referred to in the previous paragraph. In Fig. 4, the cutting members are positioned so that the sides other than the sliding surfaces of the cutting members completely contact the inner surface of the housing 10. When the cutting members are moved in the directions shown by the arrows, they slide on each other and decrease the area of the opening, and arrive at the position shown in Fig. 5, where the leading end of the convex sliding surface 2 of each cutting member abuts, so that a hexagonal recess is formed in the center on each side of the assembly. In Fig. 1, the ridgelines 221, which are formed between the middle surface 22 of the convex sliding surface 2 and the middle surface 32 of the concave sliding surface 3, form the leading end of the convex sliding surface 2. The ridgeline 211, which is formed between the upper surface 21 of the convex sliding surface 2 and the upper surface 31 of the concave sliding surface 3, appears in Fig. 5 as a line connecting the center and an angle of the hexagonal recess. The hexagonal recess disappears when the cutting members further progress until they meet at edgepoints 212, where the top surface, the upper surface 21 of the convex sliding surface 2, and the upper surface 31 of the concave sliding surface 3, all meet, so that all the surfaces disappear from sight.

In the embodiment of Figs. 4, 5, and 6, the positional relationship of the cutting members in Fig. 5 can proceed to the positional relationship of Fig. 6 by moving the cutting members further until each of the cutouts 24 abuts the inner surface of the housing 10.

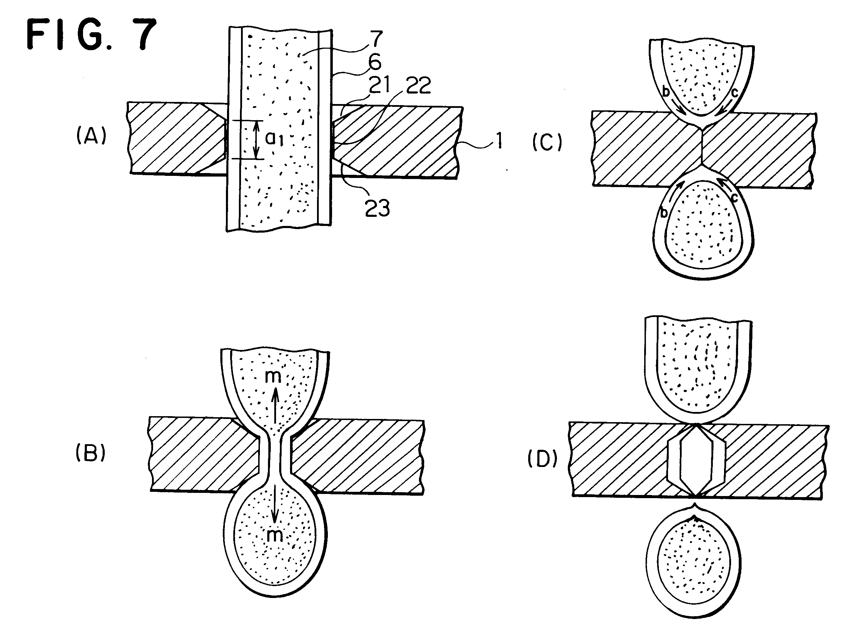

Figs. 7A, 7B, 7C, and 7D stepwise and schematically show the effects of the cutting members of this invention. In Fig. 7A, a bar-shaped continuous dough 6, which envelopes a filling 7, is fed through the opening 5, which is surrounded by the cutting members 1. The height a₁ of the middle surface of the convex sliding surface is selected according to the properties of the dough materials to be cut. The middle surface 22 of the convex sliding surface of each cutting member is in contact with the dough 6. When the cutting members are moved to the center of the opening, as shown in Fig. 7B, the dough is pressed to the center of the opening and the fillings flow in the direction as shown by arrows m. When all the ridgelines 221 meet as shown in Fig. 7C, the dough 6 is divided into upper and lower parts relative to the ridgelines 221, so that they can completely envelope their respective fillings 7, so that the filling 7 of the bar-shaped dough 6 is completely closed up by the dough, thus forming the bottom half of a spherical product, while at the same time the upper part of the spherical product under the cutting members is covered with the dough to complete the product.

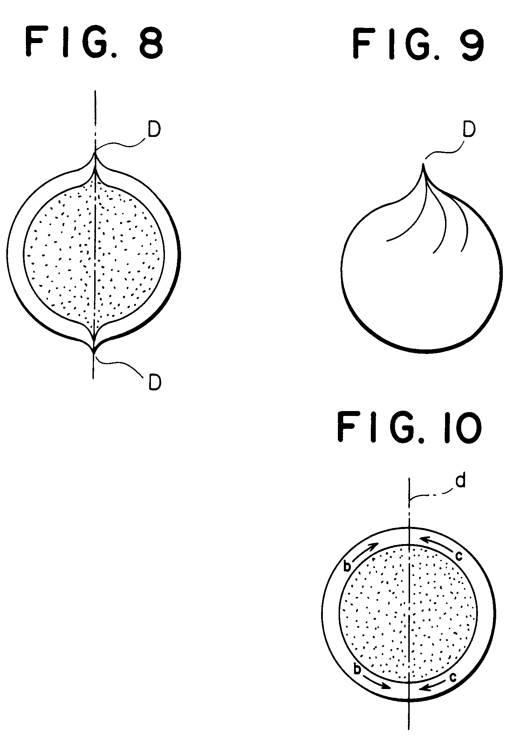

During this process, if upper and lower surfaces 21 and 23, which form convex sliding surfaces, are advanced towards the axis of the dough materials 6, a predetermined amount of the dough is guided or urged to the center by the upper and lower surfaces, while the progress of the middle surfaces 22 reduces the surface area of the neck of the dough. Stress shown by arrows b and c, shown both in Figs. 7C and 10, is generated in the dough, by the urging of the sliding surfaces, especially that of the upper and lower surfaces 21 and 23 of the convex sliding surface 2, to completely cover the filling even when a highly elastic material is used. Therefore, the cutting members can cut the dough materials without thinning the dough 6 and without exposing the fillings 7.

The complementary engagement between the convex sliding surfaces 2 and the concave sliding surfaces 3 eliminates any grooves or gaps in the inner walls of the opening surrounded by the sliding surfaces, so that a product with a smooth outer cover is cut out without generating any uneven flower-like patterns caused by such gaps or grooves. Even when there are some parts of dough materials stuck to the convex sliding surfaces 2 during the cutting process, the ridgelines 211, 221, and 231 of a cutting member trace the convex sliding surface 2 of an adjacent cutting member, so that the parts can be scraped off. The recesses generated at this step are finally eliminated when all the members abut at the edge points 212 shown in Fig. 7D. Thus, the generation of any materials sticking to the assembly can be avoided during the cutting operation. Further, due to the lubricating oil retained in the oil holder 9 and made to lubricate the sliding surfaces, during the continuous operation of the cutting members the burning of materials and their sticking to the member can be avoided.

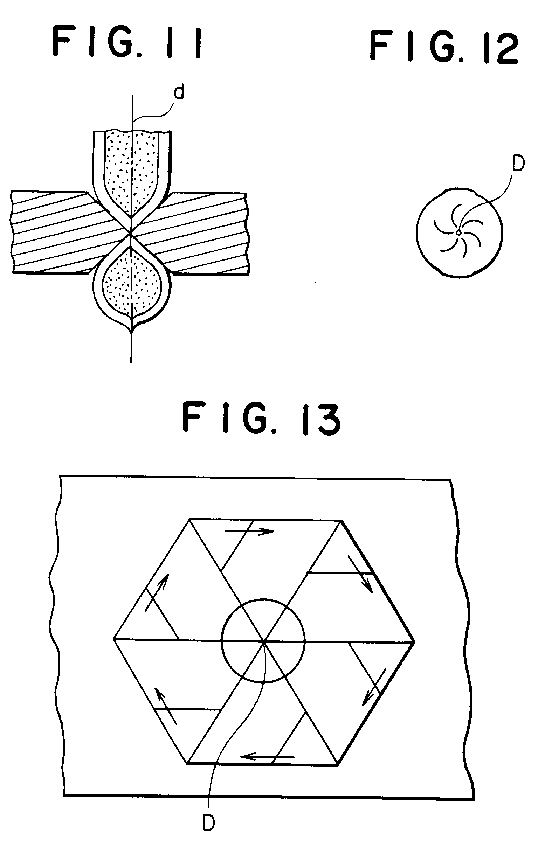

By the conventional cutting processes that use sliding cutting members, central protrusions, shown in Figs. 8, 9, and 12, are formed, and fillings are often exposed.

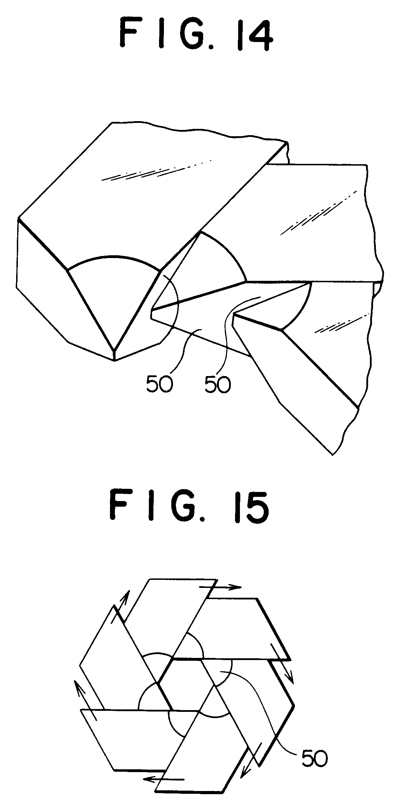

Figs. 14 and 15 show an assembly of the cutting members of a conventional apparatus for cutting an enveloped body. In the assembly steps 50 are generated between adjacent cutting members when they proceed to close the opening in the center, so that during the cutting process the generation of uneven flower-like patterns is inevitable. Also, some dough materials stick to the assembly.

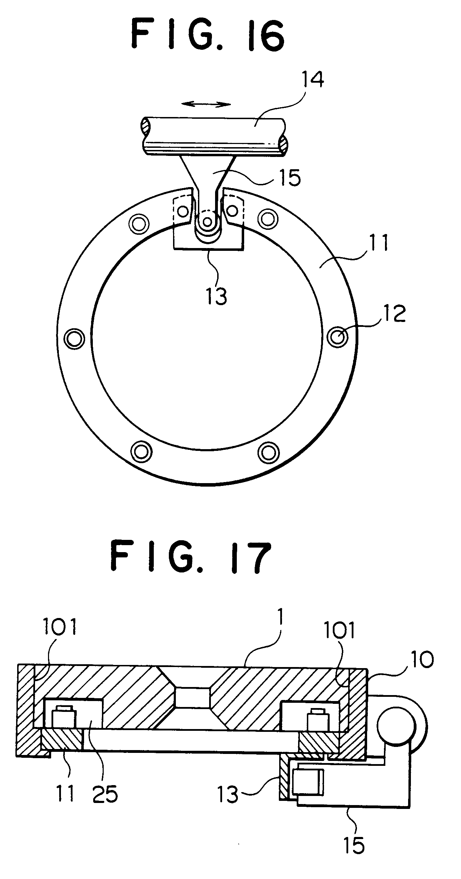

Referring to Figs. 16-20, mechanisms for driving the cutting members 1 will now be described. A housing 10, into which an assembly 4 is fitted, is a hexagonal frame in cross section when six members are used. On the bottom of the frame a driving ring 11 is mounted to slide the cutting members 1.

Driving pins 12 are fixed to the driving ring 11 with a predetermined distance between adjacent pins. These pins 12 extend into elongated holes 25, shown in Figs. 2A, 4 and 17, formed in the bottom of a respective cutting member. A bar 15, which projects from a rod 14, is inserted into a pocket 13 mounted on the bottom of the ring 11. One end of the rod 14 is pivoted to an arm 16, and the other end of the arm is pivoted to a base 41. A cam follower 18, which is mounted to a part of the arm 16 in the middle, engages a groove on a cam 19, which rotates on the base. The cam 19 is fixed to a vertical driving shaft 40, which is rotatably mounted to the base 41. The driving shaft 40 is driven by a power source not shown in the drawings.

Therefore, when a driving shaft 40 rotates, the cam 19 rotates and the cam follower 18 is moved along the groove of the cam 19 to drive the driving ring 11 via the arm 16, rod 14, bar 15, and pocket 13. The driving ring 11 causes the cutting members to move, so that the outer sides of the cutting members 1 slide on the inner surface 101 of the housing, to open and close the opening 5.

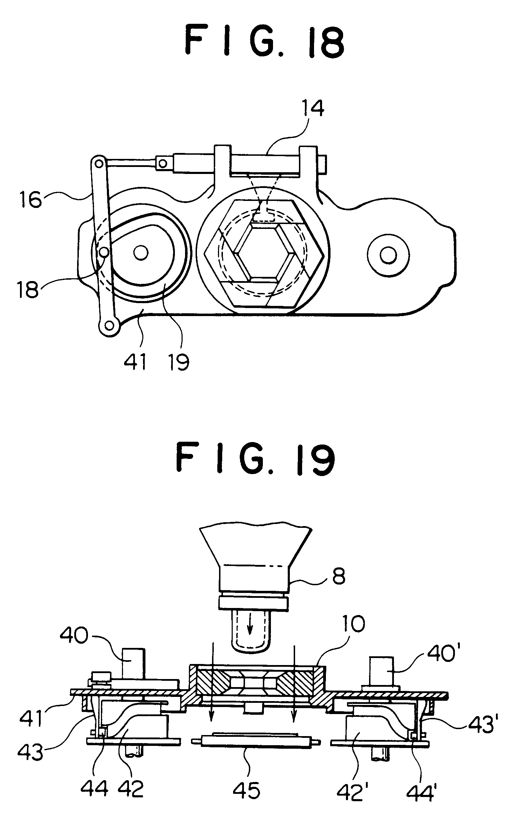

A driving shaft 40' similar to the driving shaft 40 is provided in a similar manner on the other side of the base 41 across the assembly of the cutting members. Cams 42 and 42' are fixed to the driving shafts 40 and 40' under the base 41. Each cam 42, 42' has a cam groove around it that receives a cam follower 44, 44' extending from an arm 43, 43' mounted to the bottom surface of the base 41. When these cams 42 and 42' rotate, the base is caused to go up and down via the cam followers 44, 44' following the cam grooves. In Fig. 19, a feeder 8 feeds a bar-shaped dough into the opening of the cutting member assembly, and a conveyor 45 carries out products.

As stated above, the opening and closing movements of the opening 5 are caused by the rotation of the driving ring 11. The up and down movement of the base 41 is synchronized with the opening and closing movement such that when the base is descending, the area of the opening 5 decreases, and when it has just reached the lowest position, the opening 5 is closed as shown in Fig. 7C or 7D, and after that the opening is immediately opened and the base 41 moves up.

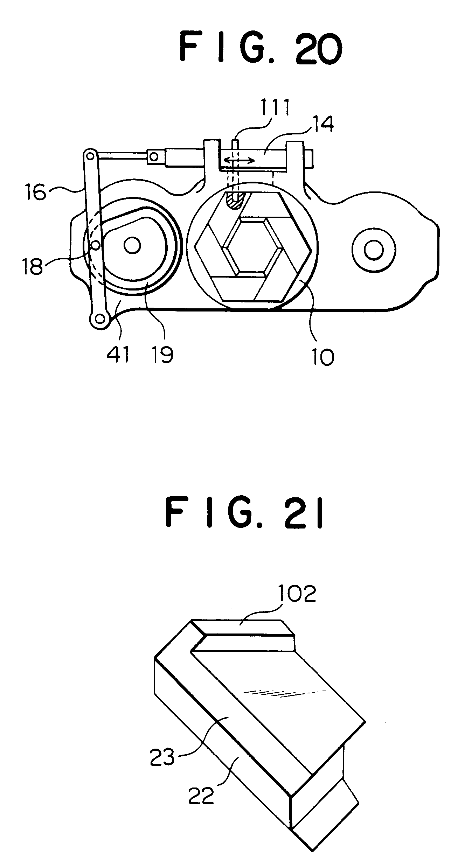

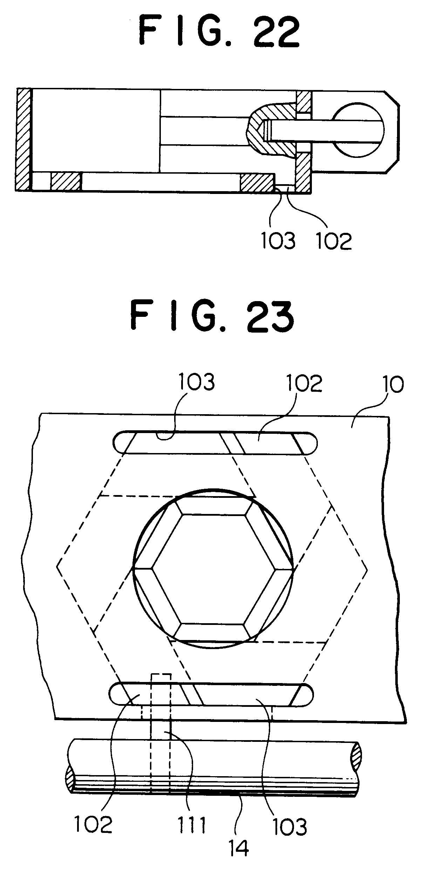

Referring to Figs. 20-23, another embodiment of the mechanism for driving the cutting members will now be explained. A guiding projection 102 is provided on at least one cutting member. In Fig. 23 two slots 103, which are parallel to the inner wall of the housing 10, into which the guiding projection 102 is fitted, are provided on the bottom of the housing 10, opposite each other. One end of a driving pin 111 is inserted into a hole provided in one of the cutting members 1, and its other end is held by the rod 14. Therefore, when the driving shaft 40 rotates, the cam follower 18 is moved by the cam 19 to drive the driving pin 111 via the arm 16 and rod 14 so that the cutting member is moved. In this mechanism the cutting members having the guiding projection 102 are guided through the parallel slots 103 to move along the slots, so that the remaining cutting members are moved to open and close the opening. By providing the guide comprising the guiding projection 102 and the parallel slots 103, the sticking or biting movements of the members during the opening and closing movement of the opening are eliminated.

A notable effect of the above described embodiments is the elimination of dough burning or any catch in the sliding movement of the cutting members, while eliminating any possibility of generating flower-like patterns on the product.

A further notable effect is obtained by the two-step closing operation of the opening. Namely, even if a highly elastic dough material is not perfectly cut at the first cutting step, where all the ridgelines 221 meet, it can be completely divided into upper and lower parts at the second cutting step, where all the edge points 212 meet.

An effect similar to the above is also obtained when the cutting members of this invention have a sliding surface arcuate in cross section, as shown in Fig. 2B.

As is explained above, by providing various shapes and thicknesses of cutting members according to the properties of the dough materials to be cut, the apparatus of this invention can produce a neatly shaped product enveloped by smooth outer covers, without producing uneven flower-like patterns on it.

It will thus be seen that the present invention, at least in its preferred forms, provides an improved apparatus for cutting a double-layered bar-shaped dough product into double-layered spherical products that eliminates flower-like patterns that are formed on the outer covers of products; and furthermore provides an improved apparatus for cutting a double-layered bar-shaped dough product with a very sticky or a highly elastic dough into double-layered spherical products without causing any of the other prior art problems; and furthermore provides an improved apparatus for cutting a double-layered bar-shaped dough product into double-layered spherical products in which the apparatus is free from any interruption of the operation caused by dough material burning and sticking to the assembly.

## Claims

1. An apparatus for cutting an enveloped body, comprising an assembly having at least three circumferentially disposed cutting members with at least two sliding surfaces, assembled in sliding contact with each other such that the sliding surfaces of adjacent cutting members are slidable along each other so as to form or close a central opening surrounded by the cutting members, the opening being opened and closed for cutting the enveloped body passing therethrough, wherein one sliding surface of a cutting member forms a convex surface and the other sliding surface forms a concave surface, the convex and the concave surfaces being complementary, and the convex surface of a cutting member being arranged so as to slide on the concave surface of an adjacent cutting member and to face the opening when it is opened.

2. The apparatus of claim 1, wherein each of the sliding surfaces facing toward the center of the opening has a cutout at its outer end.

3. The apparatus of claim 1 or 2, further comprising a housing for receiving the assembly, so that the outer surfaces of the cutting members that form the outer envelope of the assembly slidingly abut the inner surface of the housing.

4. The apparatus of claim 3, further comprising a driving means for moving the assembly up and down at the same time that the assembly opens and closes.

5. The apparatus of any of the preceding claims, wherein the convex and concave sliding surfaces have a trapezoidal cross section.

6. The apparatus of any of claims 1-4, wherein the convex and concave sliding surfaces have an arcuate cross section.

7. The apparatus of any of the preceding claims, wherein the concave surface has a recess for the lubricating oil.

8. The apparatus of claim 3, further comprising a driving means for directly and separately driving each cutting member.

9. The apparatus of claim 8, wherein at least one cutting member has a guide member to be engaged with a guide slot provided in the housing.

## Patentansprüche

1. Vorrichtung zum Schneiden eines umhüllten Körpers, umfassend ein Gebilde, welches wenigstens drei auf einem Umfang angeordnete Schneidglieder mit wenigstens zwei Gleitflächen hat, die in Gleitberührung miteinander zusammengefügt sind derart, daß die Gleitflächen benachbarter Schneidglieder entlang einander gleitbar sind, so daß eine von den Schneidgliedern umgebene mittlere Öffnung gebildet oder geschlossen wird, wobei die Öffnung geöffnet und geschlossen wird zum Schneiden des durch sie hindurchgehenden umhüllten Körpers, wobei eine Gleitfläche eines Schneidgliedes eine konvexe Fläche bildet und die andere Gleitfläche eine konkave Fläche bildet, die konvexe und die konkave Fläche komplementär sind, und wobei die konvexe Fläche eines Schneidgliedes derart angeordnet ist, daß sie an der konkaven Fläche eines benachbarten Schneidgliedes gleitet und der Öffnung zugewandt ist, wenn diese geöffnet ist.

2. Vorrichtung nach Anspruch 1, wobei jede der Gleitflächen, die in Richtung zur Mitte der Öffnung gewandt ist, an ihrem Außenende einen Ausschnitt hat.

3. Vorrichtung nach Anspruch 1 oder 2, weiter umfassend ein Gehäuse zum Aufnehmen des Gebildes derart, daß die Außenflächen der Schneidglieder, welche die äußere Umhüllung des Gebildes bilden, sich gleitend gegen die Innenfläche des Gehäuses legen.

4. Vorrichtung nach Anspruch 3, weiter umfassend eine Antriebseinrichtung zum Aufwärts- und Abwärtsbewegen des Gebildes zu der gleichen Zeit, zu welcher das Gebilde öffnet und schließt.

5. Vorrichtung nach irgendeinem der vorhergehenden Ansprüche, wobei die konvexen und die konkaven Gleitflächen einen trapezförmigen Querschnitt haben.

6. Vorrichtung nach irgendeinem der Ansprüche 1 bis 4, wobei die konvexen und die konkaven Gleitflächen einen bogenförmigen Querschnitt haben.

7. Vorrichtung nach irgendeinem der vorhergehenden Ansprüche, wobei die konkave Fläche eine Ausnehmung für das Schmieröl hat.

8. Vorrichtung nach Anspruch 3, weiter umfassend eine Antriebseinrichtung zum direkten und getrennten Antreiben jedes Schneidgliedes.

9. Vorrichtung nach Anspruch 8, wobei wenigstens ein Schneidglied einen Führungsteil hat, der mit einem Führungsschlitz in Eingriff gebracht werden soll, der in dem Gehäuse vorgesehen ist.

## Revendications

1. Appareil de sectionnement d'un corps enveloppé, comprenant un ensemble comportant au moins trois éléments de coupe disposés circonférentiellement et dont chacun comprend au moins deux surfaces de glissement, ces éléments étant assemblés en contact de glissement les uns avec les autres de manière que les surfaces de glissement d'éléments voisins de coupe soient coulissantes le long l'une de l'autre de manière à former ou fermer une ouverture centrale entourée des éléments de coupe, l'ouverture étant ouverte ou fermée pour le sectionnement du corps enveloppé passant par elle, une surface de glissement d'un élément de coupe formant une surface convexe et l'autre surface de glissement formant une surface concave, les surfaces convexe et concave étant complémentaires et la surface convexe d'un élément de coupe étant disposée de manière à glisser sur la surface concave d'un élément de coupe voisin et de manière à être en face de l'ouverture lorsque celle-ci est ouverte.

2. Appareil selon la revendication 1, dans lequel chacune des surfaces de glissement qui est tournée vers le centre de l'ouverture comporte une dépouille sur l'extrémité extérieure.

3. Appareil selon la revendication 1 ou 2, comprenant par ailleurs un logement dans lequel est placé l'ensemble de façon telle que les surfaces extérieures des éléments de coupe qui forment l'enveloppe extérieure de l'ensemble soient en butée à coulissement sur la surface intérieure du logement.

4. Appareil selon la revendication 3, comprenant par ailleurs des moyens de commande pour déplacer l'ensemble vers le haut et vers le bas en même temps que l'ensemble s'ouvre et se ferme.

5. Appareil selon l'une quelconque des revendications précédentes, dans lequel les surfaces convexe et concave de glissement ont une section transversale trapézoïdale.

6. Appareil selon l'une quelconque des revendications 1 à 4, dans lequel les surfaces convexe et concave de glissement ont une section transversale courbe.

7. Appareil selon l'une quelconque des revendications précédentes, dans lequel la surface concave comporte une cavité pour de l'huile de lubrification.

8. Appareil selon la revendication 3, comprenant par ailleurs un moyen de commande pour entraîner directement et séparément chaque élément de coupe.

9. Appareil selon la revendication 8, dans lequel au moins un élément de coupe comporte un organe de guidage destiné à être placé dans une fente de guidage réalisée dans le logement.
